(19) Europäisches Patentamt / European Patent Office / Office européen des brevets

(11) **EP 4 023 735 B1**

(12) **EUROPEAN PATENT SPECIFICATION**

(45) Date of publication and mention
of the grant of the patent:
**20.09.2023   Bulletin 2023/38**

(21) Application number: **21218450.1**

(22) Date of filing: **31.12.2021**

(51) International Patent Classification (IPC):
*C09K 21/04* (2006.01)      *A62D 1/00* (2006.01)
*C23F 11/08* (2006.01)      *C23F 11/14* (2006.01)
*C23F 11/18* (2006.01)      *C09D 5/18* (2006.01)
*C09D 7/44* (2018.01)      *C09D 7/61* (2018.01)

(52) Cooperative Patent Classification (CPC):
**C09K 21/04; A62D 1/005; C09D 5/18; C09D 7/44;
C09D 7/61; C23F 11/08; C23F 11/145;
C23F 11/188**

(54) **FLAME RETARDANT COMPOSITION**

FLAMMENHEMMENDE ZUSAMMENSETZUNG

COMPOSITION IGNIFUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.12.2020   ES 202031325**

(43) Date of publication of application:
**06.07.2022   Bulletin 2022/27**

(73) Proprietor: **Barricade BRS, S.L.
50017 Zaragoza (ES)**

(72) Inventor: **ENFEDAQUE VALLESPÍN, José Alberto
50017 ZARAGOZA (ES)**

(74) Representative: **Ungria López, Javier
Avda. Ramón y Cajal, 78
28043 Madrid (ES)**

(56) References cited:
EP-A1- 3 546 029      WO-A1-03/057317
WO-A1-2014/121398      WO-A1-2015/189810
WO-A1-2020/163788

**Description**

OBJECT OF THE INVENTION

The following invention relates to a flame retardant composition, the object of which is the use thereof by aerial means and with a long term effect, i.e., once the water needed for the application thereof has evaporated.

Moreover, given that sodium polyphosphate is used as a wetting agent, the urea content used as an anticorrosion additive can be substantially reduced, avoiding problems with corrosion in the storage tanks for the composition that are manufactured from aluminium alloys. Likewise, since the composition incorporates ferric oxide at a percentage equal to or less than 1 % by weight of the composition, in the presence of a fugitive dye based on carminic acid, it has a high covering power on vegetation. Furthermore, the addition of a micronised modified sepiolite as a suspension stabiliser has clear advantages over other conventional clays such as sepiolite powder and attapulgite, Likewise, the incorporation in the composition of xanthan gum, previously granulated to a size greater than 100 micra, given its excellent results in terms of dispersion, facilitates the preparation of the concentrate, and, moreover, prevents the formation of powder in the manufacturing process.

Indeed, the composition provides novel anticorrosion additives, a food-grade fugitive pigment having zero environmental impact, together meeting all the requirements set forth with respect to long term retardants.

BACKGROUND OF THE INVENTION

Wildfires have always modelled the ground cover. Since the start of the industrial age and with forests being progressively abandoned, the amount of fuel in forests has increased considerably. If factors such as consequences of climate change and the substantial increase in wildland-urban interface were further added to this, the wildfire accident rate is a top concern.

Included among the numerous tools which are used to fight against wildfires are retardant additives which can be applied directly or indirectly on the fire front, whether by aerial or ground means participating in extinguishing the wildfire.

It is important to distinguish between long term and short term retardants. Basically, long term retardants present a flame extinguishing or retarding effect even though the water needed for the application thereof has evaporated by means of a carbonisation effect on the plant cellulosic material instead of the emission of flammable gases and the subsequent ignition and flame. Short term retardants are only effective as long as there is water present, and therefore their extinguishing capacity is based on the endothermic effect of water evaporation. These long term retardant compositions must be diluted with water before their application. This dilution is typically one part concentrate per 4 parts water by volume.

The present novelty is focused on long term retardants, hereinafter retardants, used particularly in fighting wildfires by aerial means. The use of retardants began in 1950s by the TVA (*Tennessee Valley Authority*) with the application of liquid fertilisers, mainly ammonium polyphosphate, with the addition of clays in the form of fertilisers in a suspension.

Later on, the problem of corrosion in aircraft was considered, and the formulations were optimised with anticorrosion additives, basically, to prevent corrosion in the aluminium alloy AL2024T3 used in the fixed wing aircraft, such as ferrocyanide sodium (US3960735A), such as zinc phosphates (WO 2008/155187) or such as iron pyrophosphates (US6802994). The fire proofing of wood is performed on an industrial level in the current state of the art by applying PIN (phosphorus/nitrogen) synergy for an optimal result (US3887511A). The use of nitrogenous agents, such as urea, which are complementary to phosphates and polyphosphates, has already been mentioned in the literature for an application in wildfires as an anticorrosive for aluminium alloys at high doses of more than 10%, and it must be incorporated in the manufacturing process together with the corresponding triazole to manufacture ammonium polyphosphate. This represents a difficulty because the production of ammonium polyphosphate is performed in large fertiliser plants and a modification to this process would not be economically feasible (US3809653). WO03/057317 relates to flame retardant compositions, based on ammonium polyphosphate, comprising: as corrosion inhibitor triazole derivatives; as inorganic thickener attapulgite or sepiolite; as organic thickener xanthan gum. as inorganic colouring agent iron oxide and also includes a fugitive dye.

Dyes used to make the unloading visible were also optimised, and at a later time photosensitive dyes such as rhodamine (EP 0693304 A1) or azo dyes began to be formulated so that the colour mark of the unloading on the wildland surface would disappear in the short term. In parallel, other organic thickening agents were incorporated to improve both the stability of the concentrated liquid and to increase the viscosity of the application mixture, improving the adherence on plants (US 4822524). To achieve proper wetting of the dyes and a plant substrate wetting capacity, surfactants widely used in the paint sector of the anionic organic type such as lauryl sulphonates or benzene sulphonates and the sodium salts thereof, or of the inorganic type such as alkaline polyphosphates, are used.

Long term retardants have technical specifications with minimum requirements to be met by public administrations and/or users of aerial means in the fight against wildfires. The reference specifications to verify the novelties described below are:

- **Efficacy:** test methodology of the INIA (*Institute National de Investigationes Agrarias,* Spanish National Agricultural Research Institute), which sets the extinguishing efficacy at values of 0 to 4, with 0 being the best. Retardants classified as long term must have a value of 0-1 at the dilution ratio with water recommended by the manufacturer.
- **Corrosion:** methodology of test of CEREN (*Centre d'Essais et de Reserche*, French Research Test Centre) to evaluate corrosion in test pieces made of steel, aluminium and brass, which requires for the acceptance and use thereof in extinguishing means, including aerial means, the following corrosion values: For the concentrated product, 1.450 x 10-6 cm/h, and for the diluted product, 0.580 x 10-6 cm/h.
- **Adherence/wettability:** this characteristics indicates how the retardant adheres, providing sufficient retardant agent so as to prevent ignition. The minimum level of deposited product expressed in $P_2O_5$ must be 5%.
- **Stability:** this characteristic evaluates the efficacy of organic and inorganic thickening agents in terms of keeping the pigments in suspension for the longest time possible. Stability is measured according to the syneresis presented by the suspension, i.e., the separation into two phases presented by the product in resting state. A syneresis of less than 5% is considered correct.
- **Visibility:** the colouring and its visibility 24 h after being applied on shrub material and at a distance of 15 m, with a dosage of 2 l/m$^2$ on a surface of 1 m$^2$, are evaluated. The application must be visible to the human eye, and it is classified as very good, good, acceptable and unacceptable.

Furthermore, the efficacy of flame retardants against wildfires depends directly on the phosphorus content in the application mixture to the point that a content of 8% phosphorus therein is sufficient for preventing ignition of the combustible material. The application mixture is typically prepared from the concentrated liquid product by means of diluting said concentrated liquid product in water before use as a flame retardant. Thus, the concentration of phosphorus in the application mixture, once it has been prepared by diluting the concentrate in water, depends on two factors:

a) the concentration of phosphorus in the concentrated liquid product; and
b) the ratio of dilution with water to obtain the application mixture.

With the current technology, to reach the suitable concentration of 8%, dilutions in water of 1 part concentrate per 3 parts water are needed in the case of concentrated solutions of orthophosphates, and of 1 part concentrate per 4 parts water in the case of polyphosphates, since the maximum concentration of phosphorus is determined by the maximum solubility thereof in the form of ammonium polyphosphate. To maintain the efficacy at higher dilution ratios, it is necessary to increase the concentration of phosphorus in the liquid concentrate, which is not possible in liquid phase with the current methods since said liquid phase is completely saturated. Therefore, it would be desirable to find solutions to develop a concentrated liquid product which allows for higher dilution ratios, which entails a cost savings in terms of handling the concentrate and savings when calculating the cost of the application mixture.

DETAILED DESCRIPTION OF THE INVENTION

The present specification describes a flame retardant composition based on ammonium polyphosphate, where the composition comprises:

- as a corrosion inhibitor: a) urea at a percentage between 3 and 10% by weight and in aqueous solution form; b) sodium polyphosphates with a chain length between 2 and 6; c) Zn derivatives (excluding phosphates), and, d) triazole derivatives;
- as an inorganic thickener: micronised modified sepiolite at a percentage between 1.5 and 2.5% by weight;
- as an organic thickener: granulated xanthan gum at a percentage between 0.4 and 0.8% by weight;
- as inorganic dyes: pigment dye derivatives from the family of iron oxides at a percentage between 0.5 and 1.5% by weight; and;
- as fugitive dyes: derivatives from the family of natural cochineal red dyes, CAS 1260-17-9, of formula $C_{22}H_{20}O_{13}$ at a percentage between 0.2 and 0.6% by weight.

Additionally, the present specification describes a flame retardant composition based on ammonium polyphosphate and ammonium orthophosphates, where the composition comprises:

- as a corrosion inhibitor: a) urea at a percentage between 3 and 10% by weight and in aqueous solution form; b) sodium polyphosphates with a chain length between 2 and 6; c) Zn derivatives (excluding phosphates), and, d) triazole derivatives;
- as an inorganic thickener: micronised modified sepiolite at a percentage between 1.5 and 2.5% by weight;
- as an organic thickener: granulated xanthan gum at a percentage between 0.4 and 0.8% by weight;
- as inorganic dyes: pigment dye derivatives from the family of iron oxides at a percentage between 0.5 and 1.5% by weight; and;
- as fugitive dyes: derivatives from the family of natural cochineal red dyes, CAS 1260-17-9, of formula $C_{22}H_{20}O_{13}$ at a percentage between 0.2 and 0.6% by weight.

In a particular embodiment, the sum of these components (ammonium polyphosphate, the corrosion inhibitor, the inorganic thickener, the organic thickener, the inorganic dye, the fugitive dye) represents 100% of the total weight of the composition. In other words, the composition contains only these components (ammonium polyphosphate, the corrosion inhibitor, the inorganic thickener, the organic thickener, the inorganic dye, the fugitive dye), and no further component is present. Therefore, the sum of the percentage by weight of these components (ammonium polyphosphate, the corrosion inhibitor, the inorganic thickener, the organic thickener, the inorganic dye, the fugitive dye) represents 100% of the weight of the composition. In other embodiments, the sum of these components (ammonium polyphosphate, the corrosion inhibitor, the inorganic thickener, the organic thickener, the inorganic dye, the fugitive dye) represents less than 100% of the total weight of the composition. In other words, the composition may contain a further component, in addition to these components (ammonium polyphosphate, the corrosion inhibitor, the inorganic thickener, the organic thickener, the inorganic dye, the fugitive dye). Therefore, the sum of these components (ammonium polyphosphate, the corrosion inhibitor, the inorganic thickener, the organic thickener, the inorganic dye, the fugitive dye) is less than or equal to 100%.

Ammonium polyphosphate: In a particular embodiment of the invention, the ammonium phosphate is ammonium phosphate 11-37-0. In a particular embodiment of the invention, the ammonium polyphosphate addition is between 80 and 90% by weight, preferably 85% by weight of the total weight of the composition. In a particular embodiment of the present invention, the ammonium polyphosphate consists of 50-70% by weight of polymer and between 30 and 50% by weight of phosphoric anhydride ($P_2O_5$) with respect to the total ammonium polyphosphate in the composition. In a preferred embodiment, the ammonium polyphosphate presents $P_2O_5$ comprised between 36% and 38% by weight and a polymerisation rate greater than 60%. Thus, the ammonium polyphosphate has a polymer content between 50 and 70% by weight of the total weight of the composition and a phosphoric anhydride ($P_2O_5$) content between 34 and 40% by weight of the total weight of the composition. Particularly embodiments of the invention, the polymer content is between 50 and 70%, between 55 and 70%, or between 60 and 70% by weight of the total weight of the composition, and the phosphoric anhydride ($P_2O_5$) content is between 20 and 40%, between 25 and 40%, between 30 and 40% or between 34 and 40% by weight of the total weight of the composition. In particular embodiments of the invention, the polymer content is 50%, 55%, 60%, 65%, or 70% by weight of the total weight of the composition, and the phosphoric anhydride ($P_2O_5$) content is 20%, 25%, 30%, 35% or 40% by weight of the total weight of the composition.

Corrosion inhibitors: The corrosion inhibitor is a mixture comprising: a) urea at a percentage between 3 and 10% by weight and in aqueous solution form; b) sodium polyphosphates with a chain length between 2 and 6; c) Zn derivatives (excluding phosphates), and, d) triazole derivatives. In an embodiment, the urea addition is 4.5% by weight. In a particular embodiment, the urea is previously dissolved at 40-60% in water, preferably 50%, before being incorporated into the mixture. The sodium polyphosphate is sodium polyphosphate with a chain length between 2 and 6. In a particular embodiment, the sodium polyphosphate is disodium pyrophosphate ($Na_2H_2P_2O_7$), CAS 7722-88-5, with an addition of 0.5% to 2% by weight, and more preferably, 1% by weight. As a complementary corrosion inhibitor, the Zn derivative is Zn sulphate at a percentage between 0.4% and 0.6% by weight, and more preferably, 0.5% by weight. As a complementary corrosion inhibitor, benzotriazole is among the group of triazoles added at a percentage between 0.4% and 0.6% by weight, and more preferably, 0.5% by weight. Emphasis can be placed on the fact that corrosion in the aircraft has always been a subject of concern, particularly due to the aluminium alloy forming the fuselage and other important part of the aircraft. Ammonium polyphosphate is highly corrosive and needs to incorporate anticorrosion additives for use. Many corrosion inhibitors have been used in the past, but because of issues with toxicity, the environmental impact, etc., their use has been restricted. Therefore, in the last decade, all research has been focused on finding environmentally-friendly anticorrosion additives, and it has been found, for example, that certain iron and/or zinc compounds are effective anticorrosives. It is in this sense that a combination of environmentally-friendly additives is incorporated and formulated such that the content thereof is optimised with respect to the prior art. Thus, surprisingly, and based on optimising the efficacy of the retardant by incorporating nitrogenous agents such as urea in the manufacturing process for manufacturing the concentrate (see the formulations in Table 1), it has been found that their combination with anticorrosive pigments salts, oxides and/or zinc hydroxides claimed in ES2310963B1, excluding zinc phosphates (ES 200701696), triazole derivatives typically used to prevent corrosion in copper alloys, using sodium polyphosphate as a novel wetting agent in this application, allows to substantially reduce the urea content needed for a corrosion that is acceptable and below the limits expressed in the state of the art (US3809653) in aluminium alloys, according to the CEREN methodology.

Thickeners: Micronised modified sepiolite is incorporated as an inorganic thickener at a percentage between 1.5% and 2.5% by weight, and more preferably, 2% by weight. As an organic thickener, granulated xanthan gum 80 mesh is incorporated at a percentage between 0.4% and 0.8% by weight, and more preferably, 0.6% by weight. The granulated xanthan gum is microencapsulated xanthan gum. The xanthan gum can be microencapsulated in a rotary drum with 1% PVA (polyvinyl alcohol) and 1% water. It has been found that clays modified and processed according to document ES2386711 A1, based on natural clays from the highly micronised palygorskite-sepiolite or attapulgite group, and initially designed to be compatible with organic polymer matrices, and with a particle size of 95% less than 45 micra, considerably improve conventional clays for the scope of desired parameters with respect to the stability of the concentrate in this application, and also with respect to adhesion capacity on vertical surfaces. Likewise, it has been formulated with xanthan gum, previously granulated to a size greater than 100 micra, due to its excellent results in terms of its dispersion in the preparation of the concentrate, avoiding the formation of powder in the manufacturing process and avoiding the formation of clumps in the process of dispersing same in the concentrated retardant.

Dyes: As inorganic pigment dyes, the composition incorporates ferric oxide at a percentage between 0.5% and 1.5% by weight, and more preferably, 1% by weight. As fugitive dyes, it incorporates cochineal red at a percentage of 0.2% to 0.6% by weight, and more preferably, 0.4% by weight. Not only has the composition of the present invention retained its extinguishing capacity in terms of dilution needed to pass an efficacy test defined by the INIA (*Institute National de Investigationes Agrarias,* Spanish National Agricultural Research Institute), but it has also shown a satisfactory covering power on vegetation (visibility) with a ferric oxide dosage equal to or less than 1%, in the presence of a novel, food-grade fugitive dye with zero environmental impact in this application. The colouring of the retardant is important for identifying the discharges made by the aerial means. Red ferric oxide is commonly used as an opaque pigment, but recently steps have been taken towards a fugitive pigmentation, in other words, non-permanent pigmentation. To that end, synthesised organic pigments are formulated together with an opaque pigment having a low content, such as ferric oxide, and these photosensitive pigments present a questionable environmental impact in relation to their PBT. Therefore, finding a new natural fugitive pigment having zero environmental impact is also a novel objective.

Advantages of the composition of the invention: In any development on retardants, minimum values of its features must always be met in order to be classified as such, and therefore all the novelties incorporated in the formulation must meet this required minimums, not only with respect to the object of the invention, such as novelty in corrosion and colouring, but rather in all the other characteristics thereof. Indeed, the composition provides novel anticorrosion additives, a food-grade fugitive pigment having zero environmental impact, together meeting all the requirements set forth with respect to long term retardants.

Method of preparation: The dispersions were prepared by means of a Cowles disk agitator 5 cm in diameter and with a tangential speed of 15 m/s in a beaker of 1000 cm$^3$. The order of incorporation of the additives is that expressed in the order of the formulation, with the operation lasting for 20 minutes per operation. The temperature was kept between 20 and 25 °C. The tests with diluted product were typically performed with a dilution ratio of 1:4 parts concentrate: part water by volume (formulations 0-12).

Diluted compositions of the invention: An objective of the present invention is to provide a way to disperse a phosphorus ammonium salt such that the concentration thereof is greater than the conventional concentration, and therefore the concentrated liquid preparation can be diluted with more water for the final application. In fact, the concentrated retardant liquid containing crystalline ammonium phosphates added to the overall formulation has, according to the data obtained from the examples described below, sufficient efficacy at dilution ratios of up to 1 part concentrate with 6.5 parts water and a satisfactory storage stability despite the high content of ammonium salts. This stability is achieved by means of (a) interaction with the presence of urea, (b) suitable rheology of the medium and intense dispersion of the solid ammonium phosphates by means of high shear dispersion. The formulations containing dispersed ammonium phosphates meet the remaining requirements set forth for retardants, such as corrosion, pH, density, etc. The formulations are environmentally-friendly since they are soluble inorganic products widely used as such as fertilisers. Thus, in an additional aspect, the invention relates to the flame retardant composition, where the composition further comprises 5-15% by weight of a mixture of ammonium orthophosphates. In a particular embodiment of the invention, the percentage by weight of the mixture of ammonium orthophosphates is 5%, 6%, 7%, 8%, 9%, 10%, 11%, 12%, 13%, 14%, or 15%. In one embodiment of the invention, the ammonium orthophosphates are a mixture of monobasic ammonium orthophosphate (Number CAS: 7722-76-1) and dibasic ammonium orthophosphate (Number CAS: 7783-28-0). In particular embodiments, the mixture of monobasic ammonium orthophosphate and dibasic ammonium orthophosphate is an equimolecular mixture. In particular embodiments of the invention, the mixture of both phosphates is presented in crystalline form with a particle size less than 100 micra. Additionally, the invention relates to a diluted mixture comprising as a concentrated liquid product a flame retardant composition according to the invention, where the flame retardant composition is diluted in water at a retardant: water ratio of 1:4 to 1:7 by volume. In particular embodiments of the invention, the retardant: water ratio is 1:4 (i.e., 25%), 1:4.5 (i.e., 22.22%), 1:5 (i.e., 20%), 1:5,5 (i.e., 18.18%), 1:6 (i.e., 16.67%), 1:6,5 (i.e., 15.38%), 1:7 (i.e., 14.29%). In a particular embodiment of the invention, the flame retardant composition is diluted in water at a retardant: water ratio of 1:6 by volume (i.e., 16.67%).

Additionally, the invention relates to the following aspects:

1. A flame retardant composition based on ammonium polyphosphate, characterised in that the composition comprises:

a) a corrosion inhibitor which consists of:

- an aqueous solution of urea at a percentage between 3 and 10% by weight of the total weight of the composition;
- sodium polyphosphates with a chain length between 2 and 6;
- Zn derivatives (excluding phosphates); and
- triazole derivatives.

b) an inorganic thickener at a percentage between 1.5 and 2.5% by weight of the total weight of the composition, where the inorganic thickener is micronised modified sepiolite or micronised modified attapulgite;

c) an organic thickener at a percentage between 0.4 and 0.8% by weight of the total weight of the composition, where the organic thickener is granulated xanthan gum;

d) inorganic pigment dyes at a percentage between 0.5 and 1.5% by weight of the total weight of the composition, where the inorganic pigment dyes are derivatives from the family of iron oxides; and

e) fugitive dyes at a percentage between 0.2 and 0.6% by weight of the total weight of the composition, where the fugitive dyes are derivatives from the family of cochineal red dyes.

2. The flame retardant composition according to aspect 1, characterised in that the ammonium polyphosphate consists of 50-70% by weight of polymer and between 30 and 50% by weight of phosphoric anhydride ($P_2O_5$) with respect to the total ammonium polyphosphate in the composition.

3. The flame retardant composition according to any one of aspects 1 or 2, characterised in that the ammonium polyphosphate contains $P_2O_5$ at a percentage comprised between 36% and 38% by weight and a polymerisation rate greater than 60%.

4. The flame retardant composition according to any one of aspects 1 to 3, characterised in that the ammonium polyphosphate is between 80 and 90% by weight of the total weight of the composition, preferably 85% by weight of the total weight of the composition.

5. The flame retardant composition according to any one of aspects 1 to 4, characterised in that the aqueous solution of urea is 4.5% by weight of the total weight of the composition.

6. The flame retardant composition according to any one of aspects 1 to 5, characterised in that the aqueous solution of urea is urea dissolved in water at 40-60%, preferably urea dissolved in water at 50%.

7. The flame retardant composition according to any one of aspects 1 to 6, characterised in that the sodium polyphosphate is $Na_2H_2P_2O_7$ (disodium pyrophosphate), CAS 7722-88-5, at a percentage of 0.5% to 2% by weight of the total weight of the composition, and more preferably, 1% by weight of the total weight of the composition.

8. The flame retardant composition according to any one of aspects 1 to 7, characterised in that the Zn derivative is Zn sulphate at a percentage between 0.4% and 0.6% by weight of the total weight of the composition, and more preferably, 0.5% by weight of the total weight of the composition.

9. The flame retardant composition according to any one of aspects 1 to 8, characterised in that benzotriazole is among the group of triazoles added at a percentage between 0.4% and 0.6% by weight of the total weight of the composition, and more preferably, 0.5% by weight of the total weight of the composition.

10. The flame retardant composition according to any one of aspects 1 to 9, characterised in that the inorganic thickener is micronised modified sepiolite at a percentage between 1.5% and 2.5% by weight of the total weight of the composition, preferably 2% by weight of the total weight of the composition.

11. The flame retardant composition according to any one of aspects 1 to 10, characterised in that the organic thickener is xanthan gum at a percentage between 0.4% and 0.8% by weight of the total weight of the composition, preferably 0.6% by weight of the total weight of the composition.

12. The flame retardant composition according to aspect 11, characterised in that the xanthan gum is granulated xanthan gum 80 mesh.

13. The flame retardant composition according to aspect 12, characterised in that the granulated xanthan gum is microencapsulated in a rotary drum with 1 % PVA (polyvinyl alcohol) and 1 % water.

14. The flame retardant composition according to any one of aspects 1 to 13, characterised in that the inorganic pigment dye comprises ferric oxide at a percentage between 0.5% and 1.5% by weight of the total weight of the composition, and more preferably, 1% by weight of the total weight of the composition.

15. The flame retardant composition according to any one of aspects 1 to 14, characterised in that the fugitive dye incorporates carmine red, CAS 1260-17-9, at a percentage of 0.2% to 0.6% by weight of the total weight of the composition, and more preferably, 0.4% by weight of the total weight of the composition.

16. A flame retardant composition based on ammonium polyphosphate, characterised in that the composition comprises an inorganic thickener at a percentage between 1.5 and 2.5% by weight of the total weight of the composition, where the inorganic thickener is micronised modified palygorskite-sepiolite or micronised modified attapulgite.

17. The flame retardant composition according to aspect 16, characterised in that the composition further comprises inorganic pigment dyes at a percentage between 0.5 and 1.5% by weight of the total weight of the composition, where the inorganic pigment dyes are derivatives from the family of iron oxides; preferably ferric oxide at a percentage between 0.5% and 1.5% by weight of the total weight of the composition, and more preferably, 1 % by weight of the total weight of the composition.

18. The flame retardant composition according to aspect 17, characterised in that the composition further comprises a corrosion inhibitor comprising urea.

19. The flame retardant composition according to any one of aspects 16 to 18, characterised in that the ammonium polyphosphate consists of 50-70% by weight of polymer and between 30 and 50% by weight of phosphorus oxide ($P_2O_5$) with respect to the total ammonium polyphosphate in the composition.

20. The flame retardant composition according to any one of aspects 16 to 19, characterised in that the ammonium polyphosphate contains $P_2O_5$ at a percentage comprised between 36% and 38% by weight and a polymerisation rate greater than 60%.

21. The flame retardant composition according to any one of aspects 16 to 20, characterised in that the ammonium polyphosphate is between 80 and 90% by weight of the total weight of the composition, preferably 85% by weight of the total weight of the composition.

All terms and embodiments described elsewhere in this document are equally applicable to any aspect of the invention. According to the present invention, the singular terms "the", "a", "one", likewise refer to their corresponding plural terms "the", "some", unless it can be inferred from context that the term clearly refers to a singular entity. The term "comprises" or "comprising", as used herein, also describes "consists of" or "consisting of" according to generally accepted patent practice.

EXAMPLES

The following invention is described by means of the following examples, which must be interpreted as being merely illustrative and not limiting of the scope of the invention.

**Example 1.- Formulations of the invention**

Attached to this specification is Table 1, which includes different formulations in order to assess those which actually fulfil the objective that is sought, such that a series of examples are analysed below:

Table 1: Formulations of the invention

| | Addit 1 | Addit 2 | Addit 3 | Addit 4 | Addit 5 | Addit 6 | Addit 7 | Addit 8 | Addit 9 | Addit 10 | Addit 11 | Addit 12 |
|---|---|---|---|---|---|---|---|---|---|---|---|---|
| Formula 0 | 85 | 10 | 0 | 2 | 0 | 0 | 0.6 | 0 | 1 | 0.4 | 0.5 | 0.5 |
| Formula 1 | 85 | 9 | 0 | 2 | 0 | 0 | 0.6 | 1 | 1 | 0.4 | 0.5 | 0.5 |
| Formula 2 | 85 | 9 | 0 | 0 | 2 | 0 | 0.6 | 1 | 1 | 0.4 | 0.5 | 0.5 |
| Formula 3 | 85 | 9 | 0 | 0 | 0 | 2 | 0.6 | 1 | 1 | 0.4 | 0.5 | 0.5 |
| Formula 4 | 85 | 9.4 | 0 | 2 | 0 | 0 | 0.6 | 1 | 0.6 | 0.4 | 0.5 | 0.5 |
| Formula 5 | 85 | 9.4 | 0 | 0 | 2 | 0 | 0.6 | 1 | 0.6 | 0.4 | 0.5 | 0.5 |
| Formula 6 | 85 | 9.4 | 0 | 0 | 0 | 2 | 0.6 | 1 | 0.6 | 0.4 | 0.5 | 0.5 |
| Formula 7 | 85 | 4.5 | 4.5 | 2 | 0 | 0 | 0.6 | 1 | 1 | 0.4 | 0.5 | 0.5 |
| Formula 8 | 85 | 4.5 | 4.5 | 0 | 2 | 0 | 0.6 | 1 | 1 | 0.4 | 0.5 | 0.5 |
| Formula 9 | 85 | 4.5 | 4.5 | 0 | 0 | 2 | 0.6 | 1 | 1 | 0.4 | 0.5 | 0.5 |
| Formula 10 | 85 | 4.9 | 4.5 | 2 | 0 | 0 | 0.6 | 1 | 0.6 | 0.4 | 0.5 | 0.5 |
| Formula 11 | 85 | 4.9 | 4.5 | 0 | 2 | 0 | 0.6 | 1 | 0.6 | 0.4 | 0.5 | 0.5 |
| Formula 12 | 85 | 4.9 | 4.5 | 0 | 0 | 2 | 0.6 | 1 | 0.6 | 0.4 | 0.5 | 0.5 |

- Additive 1: ammonium polyphosphate;
- Additive 2: water;
- Additive 3: urea;
- Additive 4: sepiolite powder;
- Additive 5: micronised modified sepiolite;
- Additive 6: attapulgite powder;
- Additive 7: granulated xanthan gum;
- Additive 8: sodium pyrophosphate powder;
- Additive 9: pigmented ferric oxide;
- Additive 10: carmine red powder;
- Additive 11: benzotriazole;
- Additive 12: Zn sulphate.

Basic formulation (0)

Formulation (0) (Table 1), considered as the basis for the novel development of the invention, containing as its main element ammonium polyphosphate and including known additives, such as zinc sulphate, benzotriazole, xanthan gum, ferric oxide pigment, sepiolite powder and water, provides results at the threshold of or below the minimum requirements set forth in terms of efficacy, corrosion, adherence and stability, although the novel incorporation of the food-grade, natural cochineal red fugitive pigment represents an environmental advantage with respect to other photosensitive pigments used in this application and meeting the requirements in terms of required visibility. Likewise, formulation (0) is prepared using a xanthan gum having a particle size greater than 100 micra and having been previously granulated. The incorporation of the additive in this form represents a better dispersion in the manufacturing process, avoiding the formation of clumps and considerably reducing manufacturing times.

Formulations (1), (2) and (3)

Formulations (1), (2) and (3) (Table 1) all incorporate 1% sodium pyrophosphate compared to 0% of formulation (0), and three types of clays are compared: sepiolite powder formulation (1), micronised modified sepiolite formulation (2) and attapulgite formulation (3). A substantial improvement can be observed in all of them in terms of corrosion, where the micronised modified sepiolite of formulation (2) even reaches the acceptability limits according to CEREN, a correct adherence/ wetting capacity that is improved with respect to the previous one by 50%, as well as a correct stability, but at the acceptability threshold. This example illustrates how: a) the incorporation of a surfactant, sodium pyrophosphate, to improve wetting, has had a favourable effect on reducing corrosion and considerably improving stability, and: b) the clay with which the specification is reached is the micronised modified sepiolite object of the invention referred to in formulation (2) and with which there is obtained an important reduction in the corrosion rate (40%), reaching values of less than those required by the CEREN, compared with the sepiolite powder of formulation (1) and attapulgite of formulation (2) commonly used and at the same percentage (2%). Thus, it also meets the minimum efficacy parameters required according to INIA at a ratio of dilution with water of 1: 4 by volume. Likewise, the values of wetting and adherence on vertical surfaces improve by 30%. Likewise, the stability also improves by 70%.

Formulations (4), (5) and (6)

Formulations (4), (5) and (6) intend to study the impact in terms of corrosion, efficacy, stability and colouring which may arise when reducing the ferric oxide pigment content from 1% to 0.6%, which is particularly relevant in the case of retardants with fugitive dye, varying the origin of the sepiolite in these formulations like in formulations (1), (2) and (3). The results indicate that the optimal formulation is still the one containing micronised modified sepiolite (additive 5), meeting all the requirements set forth by INIA, and the stability and colouring except corrosion set forth by CEREN.

Formulations (7), (8) and (9)

Formulations (7), (8) and (9), incorporate the water and urea formulation, returning to the initial dosage of ferric oxide of 1%. The differences between these formulations are still the three types of clays, sepiolite powder formulation (7), micronised modified sepiolite formulation (8) and attapulgite formulation (9). Again, in the formulation containing modified sepiolite of formulation (8), an improvement of 23% in terms of corrosion can be observed compared with formulation (2), and it is very favourably within the requirements set forth by CEREN. In terms of efficacy according to INIA, it presents an improvement of 50% in terms of weight loss with respect to formulation (2) and confers to formulation (8) a maximum efficacy classification. The values for stability and adherence/wetting are still within specification. This example clearly shows that the incorporation of urea in an aqueous solution considerably improves corrosion and efficacy as a retardant.

Formulations (10), (11) and (12)

Formulations (10), (11) and (12) intend to study again the reduction of ferric oxide pigment from 1% to 0.6% in successful formulations (7), (8) and (9), which include urea in order to determine whether this reduction interferes with meeting the minimums required for corrosion and other parameters. In fact, as ensues from the result tables, formulation (11), which contains micronised modified sepiolite, meets all the technical requirements for corrosion, efficacy, stability and colouring. Therefore, ferric oxide can be reduced to 0.6% in these formulations.

**Example 2.- Corrosion results in aluminium**

Table 2: Product corrosion results by complete immersion

|  | concentrate | | acceptable | diluted | | acceptable |
|---|---|---|---|---|---|---|
| Specification | 1.450x 10(-6) cm/h | | yes/no | 0.580x10(-6) cm/h | | yes/no |
| Temperature | 20°C | 50 °C | | 20°C | 50 °C | |
| Formula 0 | 2.987 | 3.335 | no | 0.721 | 0.818 | no |
| Formula 1 | 2.125 | 2.640 | no | 0.683 | 0.746 | no |
| Formula 2 | *1.415* | *1.440* | ***yes*** | *0.524* | *0.580* | ***yes*** |
| Formula 3 | 1.890 | 2.130 | no | 0.618 | 0.712 | no |
| Formula 4 | 2.389 | 2.567 | no | 0.776 | 0.794 | no |
| Formula 5 | 1.678 | 1.875 | no | 0.610 | 0.723 | no |
| Formula 6 | 2.138 | 2.346 | no | 0.680 | 0.743 | no |
| Formula 7 | *1.267* | *1.398* | ***yes*** | *0.410* | *0.423* | ***yes*** |
| Formula 8 | *0.980* | *1.218* | ***yes*** | *0.322* | *0.367* | ***yes*** |
| Formula 9 | *1.127* | *1.237* | ***yes*** | *0.380* | *0.402* | ***yes*** |
| Formula 10 | *1.398* | *1.442* | ***yes*** | *0.495* | *0.520* | ***yes*** |
| Formula 11 | *0.997* | *1.128* | ***yes*** | *0.412* | *0.445* | ***yes*** |
| Formula 12 | *1.260* | *1.397* | ***yes*** | *0.487* | *0.502* | ***yes*** |

Annex to example 2: Determination of corrosion in aluminium by complete immersion. The metallic test piece needed to perform the test is an aluminium alloy, 2024-T3. The rectangular metallic test pieces have the following dimensions: 2.5 x 10.2 x 0.3 cm. They must have a hole measuring 0.5 cm in diameter centred at 1.3 cm from one end.
Preparation of the test pieces. All the faces of the test pieces must be gently cleaned to remove traces of grease, oxidised deposits or impurities with a (medium grit) scouring pad with dimensions of 2.5 x 7.5 cm, always in the direction of lamination. Each piece of scouring pad used must be used for a single type of alloy. First, the test pieces must be submerged in the specific cleaning solution according to the table in a plastic beaker. The test pieces cannot touch one another.

| ALLOY | CHEMICAL PRODUCT | MINUTES | TEMPERATURE | OBSERVATION |
|---|---|---|---|---|
| Aluminium | 70% HNO$_3$ (concentrate) | 2-3 | Room temperature | Continue by gently exfoliating with a non-metallic brush or a scouring pad |

Once the immersion time in the cleaning solution has passed, the pieces are removed and rubbed with a scouring pad. The clean sheets are rinsed with distilled water and the surface dried. The sheets are dried by hanging them in an oven at 50 °C. The same drying oven used for the immersion test is not to be used. The vapours that are generated may modify corrosion phenomena. The sheets must be handled with tongs and gloves. When they are dry, they are removed from the drying oven and left to cool down for about 15 minutes. They are weighed on a precision balance (0.1 mg) before immersion in the product to be tested.

Corrosion is studied in complete or partial immersion in the product to be tested. For complete immersion, a volume of 800 ml of liquid must be introduced. For partial immersion, 400 ml is sufficient. A glass fibre-reinforced strip is adhered going through the open recipient from side to side through the opening of the bottle and halfway on each side. A nylon thread is prepared for being tied to the hole of the test piece and being able to leave it hanging. The test piece is submerged in the test solution of each bottle. It is tied with adhesive tape to one side of the recipient so that it can hang in the desired position. The test pieces for complete immersion tests are placed such that they are completely covered by the solution, but without touching the bottom of the bottle. The test pieces for partial immersion tests are placed such that the bottom 5 cm of the test piece are immersed in the retardant. A small pencil mark on the edge of the test piece indicates the proper immersion level. These recipients are covered with a lid. Each bottle must be correctly labelled with the name of the product, the test product batch number, the identification of the test piece submerged in the product and the date of immersion. The bottles are placed in incubators at the appropriate temperature (21 °C or 49 °C) and left to stand unmoved for 90 days of exposure period.

End of the test. Once the exposure of the test has ended, the bottles are removed from the incubators. The bottles and content are inspected, and notes are taken in regard to any broken bottle, evaporated test solution or test pieces which are destroyed or missing fragments. The test pieces are removed from the bottles. Each test piece is rinsed with an abundant jet of cold water from the faucet to remove the loose residual test solution. The test pieces are left to air dry while they are still hanging from the fishing wire. When the test pieces are dried (generally overnight), the fishing wire is removed. Once dried, corrosion products are removed from the test pieces by scraping with the flat edge of a stainless steel spatula. In some cases, the inhibitory film must be gently chipped away to clean the test piece. Once the traces of product and corrosion products have been removed, it is necessary to clean the test pieces in chemical solutions. Each batch of test pieces (no more than six) is cleaned together with a control test piece. The test pieces made of aluminium, steel and brass are submerged in the cleaning solution, supported against the sides of the container in a plastic vessel of about 600 ml, such that the test pieces cannot touch one another. After the immersion, as specified in the table, cleaning is performed with a new scouring pad. The clean test pieces are rinsed with distilled water and dried with a lint-free absorbent paper and hung in the drying oven like in the initial cleaning. If any persistent residues remain, the test pieces can be cleaned a second time, using the control test piece to determine the weight lost during cleaning. After drying, the test pieces are cooled and weighed.

Control test pieces. The control test pieces set aside for this purpose are not exposed to any of the test solutions. They are cleaned and weighed before use together with the set of exposed test pieces, and subsequently, they are weighed again to determine the weight loss of the test piece.

Corrosion rate calculations. The corrosion rate is calculated for each test piece using the initial and final weights, the surface area, the density of the alloy and the exposure time in the formula.

$$Cr = \frac{534\left[\left(weight_i - weight_f\right) - \left(weight_{c,i} - weight_{c,f}\right)\right]}{area * time * density}$$

Wherein:

- Weight$_i$ = initial weight of the test piece (mg)
- Weight$_f$ = final weight of the test piece (mg)
- Weight$_{c,i}$ = initial weight of the control test piece (mg)
- Weight$_{c,f}$ = initial weight of the test piece (mg)
- Area = exposed surface of the test piece (in2)
- Time = exposure time (h)
- Density = density of the alloy (g/cm3)

     2.77 g/cm3 for 2024-T3 Aluminium
     7.86 g/cm3 for steel 4130
     8.53 g/cm3 for brass

Three replicas will be performed for each test. Manufacturers can ask for additional replicas to be performed. The results of all the tests (except those which are rejected by means of visual inspections showing some fault in the test) with one and the same alloy, temperature and conditions of immersion will be averaged to determine the final corrosion rate.

**Example 3.- Adhesion and stability results**

Table 3: Adhesion results on vertical surfaces and concentrate stability (syneresis). Dilution ratio of 1:4 by volume (25% by weight). Concentration of $P_2O_5$ in concentrate 30%.

|  | Weight Gain W | $P_2O_5$ | Conc. visc. | Dil. visc. | Syneresis for 30 days |
|---|---|---|---|---|---|
|  | (g) | (%) | (cp) | (cp) | (%) |
| Formula 0 | 3.62 | 5.79 | 660 | 232 | 7 |
| Formula 1 | 5.28 | 8.45 | 870 | 360 | 5 |
| Formula 2 | 6.89 | 11.02 | 994 | 420 | 2 |
| Formula 3 | 5.54 | 8.86 | 760 | 289 | 6 |
| Formula 4 | 6.24 | 9.98 | 902 | 297 | 7 |
| Formula 5 | 6.92 | 11.07 | 1025 | 398 | 0 |
| Formula 6 | 5.96 | 9.54 | 980 | 367 | 8 |
| Formula 7 | 6.11 | 9.78 | 1034 | 325 | 4 |
| Formula 8 | 7.35 | 11.76 | 1128 | 347 | 2 |
| Formula 9 | 6.52 | 10.43 | 1067 | 302 | 7 |
| Formula 10 | 6.02 | 9.63 | 987 | 298 | 9 |
| Formula 11 | 6.82 | 10.91 | 1098 | 354 | 3 |
| Formula 12 | 6.23 | 9.97 | 967 | 306 | 7 |

Formulas 2, 5, 8, 11 obtain the best adherence results of the dilution and the stability of the concentrate.

Annex I to Example 3: Methodology to evaluate the adherent capacity of a long term retardant on vertical plant surfaces (document proposed to the CTN 23 SC 5 GT Retardants UNE standard).

**Object:** To evaluate the adherence capacity of a retardant mixture on a plant support under application conditions.

**Method:** To that end, a pine wood support conditioned at 40 °C for 4 h is defined. Said support having dimensions of 10 cm x 15 cm x 3 mm in thickness (commercially available as tri-ply plywood 3 mm thick) consists of three sheets of pine wood 1-0.5/1-2/1-0.5 mm thick per ply and glued to one another. For purposes of the test, impregnation of the outer plies is considered an effect of adherence and efficacy. A mark is drawn on this support 10 cm from the lower edge. The weight of the support (PC) is taken and it is stored in a desiccator at room temperature (20-25 °C). Furthermore, the retardant mixture is prepared according to the dilution instructions recommended by the manufacturer in a beaker of 600 cm3 with a mixture volume of 500 cm3. The mixture with water is stirred with a magnetic stirring rod or with gentle mechanical stirrer (approximately 200 rpm) for 5 min at room temperature (20-25 °C).

Immediately after that stirring is stopped, the support is submerged vertically up to the 10 cm mark for 5 seconds, removing it immediately and leaving it to drain vertically for another 10 seconds. The moist impregnated support is weighed (P1). Vertical adherence (AV) is calculated as the weight deposited in g/cm2.

$$AV = (P1\text{-}P0) \ / \ 100$$

As a blank, the same test is performed with distilled water, PA0 of the support and PA1 after immersion.

$$AAV = (PA1\text{-}PA0) \ /100$$

**Interpretation of the result:**

1- <u>Fire proofing criterion</u>. It is known that a concentration of P (such as $P_2O_5$) greater than 5% will not imply the non-flammability of cellulosic material. Once the weight of retardant deposited and its $P_2O_5$ concentration have been calculated, this concentration can be obtained on the wood support. Furthermore, the outer lamina (1 mm) is considered 100% impregnable for calculation purposes.

$$\text{Concentration of } P_2O_5 \ (\%) = AV \times 0.20 \times Rd \times C$$

Where:

Rd: % of concentrate in dilution mixture by weight.
C: % of $P_2O_5$ in the concentrated retardant according to the manufacturer's declaration.

2- <u>Wetting criterion</u>. It will be understood that the retardant improves vertical adherence more than water if the retained weight in the case of the retardant is at least greater than 50%

**Retention ration compared with water (RR %)**

$$RR = (AV - AAV) \times 100 \ / \ AAV$$

<u>Annex II to Example 3</u>: Stability, determination of syneresis at 30 days.
After manual stirring, the product is poured and a cylindrical test piece is completed to 100 cc. It is left to stand at a temperature between 20-25 °C for 30 days. The decanted ml (clear liquid on the surface) are measured and related to 100 ml of the test piece, with the value directly being a % of the total.

**Example 4.- Efficacy results**

Table 4: Efficacy tests on the thermobalance

|  | WEIGHT LOSS (%) | CLASSIFICATION (INIA) |
|---|---|---|
| formulation 2/30 min drying oven | 16 | **0** |
| formulation 2/90 min in drying oven | 28 | **1** |
| formulation 5/30 min in drying oven | 18 | **0** |
| formulation 5/90 min in drying oven | 31 | **1** |
| formulation 8/30 min in drying oven | 8 | **0** |
| formulation 8/90 min in drying oven | 12 | **0** |
| formulation 11 /30 min in drying oven | 12 | **0** |
| formulation 11 /90 min in drying oven | 21 | **1** |

<u>Annex to Example 4</u>: efficacy test against fire.

The test is performed in a combustion bench with gravimetric monitoring. Said experimental device is formed by a tray for supporting the fuel, consisting of two borosilicate plates 1.5 cm thick, 70 cm wide and 120 cm long, resting on aluminium profiles. The assembly stands on a balance with a sensitivity of 1 g which allows a continuous recording to be performed, throughout the test, of the variation in the weight of the fuel in the bench as a consequence of its combustion.

The forest fuel used is made up of pine needles from the forest litter of a pine grove of Pinus pinea (stone pine). In the laboratory, the decomposing pine needles, the twigs and the various existing residues are removed for the purpose of keeping only intact pine needles. The choice of this fuel is determined by the homogeneity it presents, its easy availability and the ease of handling for obtaining the desired special arrangement, as well as its energy adequacy and behaviour of the fire with respect to the general characteristics of the test. The pine needles are conditioned in a chamber (temperature = 23 °C and relative humidity = 50%) until reaching a moisture content of around 9-10%. The determination of moisture is carried out by means of drying in a drying oven (100 °C), to a constant weight, three samples taken from the fuel immediately before performing the test. The amount of fuel used in each test is 700 g/m$^2$ of dry matter, homogeneously arranged along the burning bench. The "untreated area" corresponding to the first 80 cm of the bench is arranged directly over the bench of the experimental device and the "treated area" corresponding to the last 40 cm is arranged in a separate tray on which the solution with the product to be tested, or water in the case of control tests, is applied. Said application is performed with an extinguisher backpack, the main characteristics of which are:

- Capacity: 18 1
- Residual volume: 200 cm$^3$
- Tank dimensions: 49 cm x 65 cm
- Manual two stroke LANCE with a filter in aspiration and with a double-acting nozzle: jet-spray.
- Range:
- Jet > 8 m
- Spray> 3 m
- Flow volume: 120 cm$^3$ (complete round trip)
- Dimensions of the lance: 1070 - 670 mm

Concentration and dosage: A concentration of 1:4 by volume (recommended by the requesting companies) is considered, applying the solution, in fresh water, at a ratio of 1 l/m$^2$. However, the requesting company may ask for tests to be performed at other concentrations.

Once the application has been performed, two types of test conditions or treatments are performed:

- The treated fuel is left to stand for 15 minutes in the laboratory at room temperature, and it is then kept in a drying oven at 42±2 °C for 30 minutes.
- The treated fuel is left to stand for 15 minutes in the laboratory at room temperature, and it is then kept in a drying oven at 42±2 °C for 90 minutes.

Development of the test: Once the time defined for each of the treatments has passed, the untreated fuel and the fuel treated with the solution of the product to be tested are arranged in their corresponding area of the burning bench, with the surface of the untreated area being 80 cm x 70 cm and the surface of the treated area being 40 cm x 70 cm. Samples of fuel are taken from the untreated area and from the treated area to carry out, by means of drying in a drying oven at 100 °C, the determination of the moisture content of the fuel corresponding to each of them. Likewise, six measurements of the thickness of the layer of pine needles are taken both in the untreated area and in the untreated area to verify that said fuel has been arranged homogeneously. The fire is started in a line with a cotton wick impregnated with alcohol, and the data acquisition program of the balance is connected. Every 20 cm, se the passage times of the front are taken, and the height of the flame is estimated. Once the weight required by the balance is kept constant, which means that combustion has ended, the data acquisition system is disconnected. Lastly, the residues corresponding to the untreated area and to the treated area are weighed separately. In the latter, the moisture content is determined in order to assess the amount of dry matter not consumed during combustion. For each of the conditions, at least two repetitions are performed. Durante the course of each of the tests, photographs are taken and they allow different aspects thereof to be seen.

As mentioned, the experimental device designed to perform the efficacy tests described allows a continuous record of the weight loss of the fuel throughout combustion to be performed both in the untreated fuel area and in the area in which treatment has been performed. The recorded data allow tracking the curve of the variation in weight over the time that the test lasts, during which the successive phases of combustion are distinguished:

1. Establishing the steady-state of combustion.
2. Steady-state of combustion established in the untreated fuel area, represented by a line.
3. Combustion in the treated fuel area represented by the subsequent decrease in the slope of the line, in accordance with product efficacy.

For each product object of the test, the weight-time curves, means of the repetitions performed for each of the treatments are presented in the reports. In the same graph, there is a curve corresponding to the "control" tests, in which the treatment of the fuel has been performed only with water, under identical conditions in terms of dosage and treatments. The comparison of the slope of the curves allows the efficacy of the product compared to that of water and the difference existing between the types of treatment to be seen.

Furthermore, and according to the weight percentage consumed with respect to that initially provided, in the "treated area", the classification presented in Table 1 has been proposed. Obviously, for the same test conditions, a higher weight of residues translates into a higher efficacy of the product.

Table 5: Retardant efficacy classification

| WEIGHT CONSUMED IN THE TREATED AREA | CLASSIFICATION |
|---|---|
| 0-20% | 0 |
| 20-40% | 1 |
| 40-60% | 2 |
| 60-80% | 3 |
| 80-100% | 4 |

Accordingly, for each of the test conditions, the efficacy of the product is estimated by comparing the mean curve of the variation in weight over time and the curve obtained in control tests in which the corresponding treatment has been performed only with water. Likewise, for each test condition, the resulting classification and the classification corresponding to the control tests are shown according to the proposed scale. In preparing this test, the results of the visual observations of the colouring of the product are recorded. (*Institute National de Investigation de Alimentation y Agraria, INIA).*

**Example 5.- Addition of crystalline ammonium phosphates**

Formulation 8 from among the preceding examples is used as a comparative reference under the same formulation number, compared to new formulations (formulations 13-16) which incorporate crystalline ammonium phosphates. Crystalline ammonium phosphates are an equimolecular mixture of monobasic ammonium orthophosphate (MAP) and dibasic ammonium orthophosphate (DAP), where the mixture of said crystalline ammonium phosphates has a particle size less than 100 micra. Formulations 13 and 14 compare, with and without urea, the impact on efficacy and corrosion for a concentration of ferric oxide at 1%, whereas formulations 15 and 16 are formulated with a concentration of ferric oxide at 0.6%.

Table 6. Composition of formulations 13-16 compared with reference formulation 8. The values refer to the percentage by weight of each additive in the formulation.

| | formula 8 | formula 13 | formula 14 | formula 15 | formula 16 |
|---|---|---|---|---|---|
| **Ammonium polyphosphate** | 85 | 80 | 80 | 80 | 80 |
| **Water** | 4.5 | 0 | 0 | 0 | 0 |
| **Urea** | 4.5 | 4 | 0 | 4 | 0 |
| **MAP/DAP** | 0 | 10 | 14 | 10 | 14 |
| **Sepiolite** | 2 | 2 | 2 | 2 | 2 |
| **Xanthan gum** | 0.6 | 0.6 | 0.6 | 0.6 | 0.6 |
| **Sodium pyrophosphate** | 1 | 1 | 1 | 1 | 1 |
| **Ferric oxide** | 1 | 1 | 1 | 0.6 | 0.6 |
| **Cochineal red** | 0.4 | 0.4 | 0.4 | 0.8 | 0.8 |
| **Dibenzotriazole** | 0.5 | 0.5 | 0.5 | 0.5 | 0.5 |

(continued)

| | formula 8 | formula 13 | formula 14 | formula 15 | formula 16 |
|---|---|---|---|---|---|
| Zinc sulphate | 0.5 | 0.5 | 0.5 | 0.5 | 0.5 |
| TOTAL | 100% | 100% | 100% | 100% | 100% |

The results of the efficacy and corrosion tests are shown below in Tables 7 and 8. Table 7 particularly shows that formulations 13-16 allow dilutions higher than the typical 1:4 dilution, resulting in application mixtures which meet the requirements of the INIA classification.

Table 7: Efficacy and INIA classification

| | WEIGHT LOSS (%) | CLASSIFICATION (INIA) | DILUTION (in water) |
|---|---|---|---|
| formulation 8 / 30 min in drying oven | 8 | 0 | 1:4 |
| formulation 8 / 90 min in drying oven | 12 | 0 | |
| formulation 13 / 30 min in drying oven | 15 | 0 | 1:5 |
| formulation 13 / 90 min in drying oven | 28 | 1 | |
| formulation 14 / 30 min in drying oven | 25 | 1 | 1:6 |
| formulation 14 / 90 min in drying oven | 34 | 1 | |
| formulation 15 / 30 min in drying oven | 16 | 0 | 1:5 |
| formulation 15 / 90 min in drying oven | 30 | 1 | |
| formulation 16 / 30 min in drying oven | 25 | 1 | 1:6 |
| formulation 16 / 90 min in drying oven | 42 | 2 | |

Table 8: Corrosion

| | Concentrate | | Acceptable | Diluted | | Acceptable |
|---|---|---|---|---|---|---|
| Specification | 1.450x10(-6) cm/h | | Yes/ No | 0.580x10(-6) cm/h | | Yes/ No |
| Temperature | 20 °C | 50 °C | | 20 °C | 50 °C | |
| Formula 8 | 0.980 | 1.218 | Yes | 0.322 | 0.367 | Yes |
| Formula 13 | 1.167 | 1.356 | Yes | 0.245 | 0.459 | Yes |
| Formula 14 | 1.260 | 1.442 | Yes | 0.364 | 0.534 | Yes |
| Formula 15 | 1.012 | 1.256 | Yes | 0.123 | 0.487 | Yes |
| Formula 16 | 1.183 | 1.385 | Yes | 0.232 | 0.527 | Yes |

Formulations 13 and 15 indicate that the ferric oxide content can be reduced as long as urea is present in the formula, maintaining the correct efficacy and corrosion values at dilutions higher than 1 to 4, namely up to at least 1 to 5. The exact same thing occurs in formulations 14 and 16 in which since there is a higher concentration of phosphorus, it can be diluted up to 1 part per at least 6 parts water. Therefore, the incorporation of MAP/DAP considerably improves the efficacy and even dilutions much higher than 1 part per 4 parts water can be achieved, maintaining the efficacy and corrosion at the levels required for the application.

**Claims**

1.  A flame retardant composition based on ammonium polyphosphate, **characterised in that** the composition comprises:

- as a corrosion inhibitor: a mixture comprising (a) urea, at a percentage between 3 and 10% by weight of the total weight of the composition and in aqueous solution form; (b) sodium polyphosphates with a chain length between 2 and 6; (c) Zn derivatives excluding phosphates, and, (d) triazole derivatives;

- as an inorganic thickener: micronised modified sepiolite at a percentage between 1.5 and 2.5% by weight of the total weight of the composition;

- as an organic thickener: granulated xanthan gum at a percentage between 0.4 and 0.8% by weight of the total weight of the composition;

- as inorganic pigment dyes: derivatives from the family of iron oxides at a percentage between 0.5 and 1.5% by weight of the total weight of the composition, and;

- as fugitive dyes: derivatives from the family of cochineal red dyes at a percentage between 0.2 and 0.6% by weight of the total weight of the composition.

2. The flame retardant composition according to claim 1, **characterised in that** the ammonium polyphosphate addition is between 80 and 90% by weight of the total weight of the composition, preferably 85% by weight of the total weight of the composition.

3. The flame retardant composition according to any one of claims 1 or 2, **characterised in that** the ammonium polyphosphate has a polymer content between 50 and 70% by weight and phosphoric anhydride content between 34 and 40% by weight, with respect to the total ammonium polyphosphate in the composition, preferably wherein the ammonium polyphosphate has a $P_2O_5$ comprised between 36% and 38% by weight and a polymerisation rate greater than 60%.

4. The flame retardant composition according to any one of claims 1 to 3, **characterised in that** the urea addition is 4.5% by weight of the total weight of the composition.

5. The flame retardant composition according to any one of claims 1 to 4, **characterised in that** the sodium polyphosphate is $Na_2H_2P_2O_7$ (disodium pyrophosphate), CAS 7722-88-5, with an addition of 0.5% to 2% by weight of the total weight of the composition, and more preferably, 1% by weight of the total weight of the composition.

6. The flame retardant composition according to any one of claims 1 to 5, **characterised in that** as a complementary corrosion inhibitor, the Zn derivative is Zn sulphate at a percentage between 0.4% and 0.6% by weight of the total weight of the composition, and more preferably, 0.5% by weight of the total weight of the composition.

7. The flame retardant composition according to any one of claims 1 to 6, **characterised in that** as a complementary corrosion inhibitor, benzotriazole is among the group of triazoles added at a percentage between 0.4% and 0.6% by weight of the total weight of the composition, and more preferably, 0.5% by weight of the total weight of the composition.

8. The flame retardant composition according to any one of claims 1 to 7, **characterised in that** as an inorganic thickener, micronised modified sepiolite is incorporated at a percentage between 1.5% and 2.5% by weight of the total weight of the composition, and more preferably, 2% by weight of the total weight of the composition.

9. The flame retardant composition according to any one of claims 1 to 8, **characterised in that** as an organic thickener, granulated xanthan gum 80 mesh is incorporated at a percentage between 0.4% and 0.8% by weight of the total weight of the composition, and more preferably, 0.6% by weight of the total weight of the composition.

10. The flame retardant composition according to claim 9, **characterised in that** the granulated xanthan gum is microencapsulated xanthan gum.

11. The flame retardant composition according to any one of claims 1 to 10, **characterised in that** as inorganic pigment dyes, ferric oxide is incorporated at a percentage between 0.5% and 1.5% by weight of the total weight of the composition, and more preferably, 1% by weight of the total weight of the composition.

12. The flame retardant composition according to any one of claims 1 to 11, **characterised in that** as fugitive dyes, carmine red, CAS 1260-17-9, is incorporated at a percentage of 0.2% to 0.6% by weight of the total weight of the composition, and more preferably, 0.4% by weight of the total weight of the composition.

13. The flame retardant composition according to any one of claims 1 to 12, where the composition further comprises a mixture of ammonium orthophosphates at a percentage of 5-15% by weight of the total weight of the composition, preferably wherein the ammonium orthophosphates are a mixture of monobasic ammonium orthophosphate (MAP) and dibasic ammonium orthophosphate (DAP), more preferably where the mixture of monobasic ammonium orthophosphate and dibasic ammonium orthophosphate is an equimolecular mixture.

14. A diluted mixture comprising a flame retardant composition according to claim 13, wherein the flame retardant composition is diluted in water at a retardant: water ratio of 1:4 to 1:7 by volume, preferably wherein the flame retardant composition is diluted at a retardant: water ratio of 1:6 by volume.

**Patentansprüche**

1. Flammenhemmende Zusammensetzung auf Basis von Ammoniumpolyphosphat, **dadurch gekennzeichnet, dass** die Zusammensetzung aufweist:

   - als Korrosionsverhinderungsmittel: eine Mischung mit (a) Harnstoff mit einem Anteil zwischen 3 und 10 Gew.-% des Gesamtgewichts der Zusammensetzung und in Form von wässriger Lösung; (b) Natriumpolyphosphaten mit einer Kettenlänge zwischen 2 und 6; (c) Zn-Derivaten ohne Phosphate, und (d) Triazolderivaten;
   - als ein anorganisches Verdickungsmittel: mikroniziertes modifiziertes Sepiolith mit einem Anteil zwischen 1,5 und 2,5 Gew.-% des Gesamtgewichts der Zusammensetzung;
   - als einem organischen Verdickungsmittel: granulierter Xanthan-Gummi mit einem Anteil zwischen 0,4 und 0,8 Gew.-% des Gesamtgewichts der Zusammensetzung;
   - als anorganischen Pigmentfarbstoffen: Derivate aus der Familie der Eisenoxide mit einem Anteil zwischen 0,5 und 1,5 Gew.-% des Gesamtgewichts der Zusammensetzung, und
   - als flüchtige Farbstoffe: Derivate aus der Familie der roten Cochenillefarbstoffe mit einem Anteil zwischen 0,2 und 0,6 Gew.-% des Gesamtgewichts der Zusammensetzung.

2. Flammenhemmende Zusammensetzung nach Anspruch 1, **dadurch gekennzeichnet, dass** die Zugabe des Ammoniumpolyphosphats zwischen 80 und 90 Gew.-% des Gesamtgewichts der Zusammensetzung, vorzugsweise 85 Gew.-% des Gesamtgewichts der Zusammensetzung, ausmacht.

3. Flammenhemmende Zusammensetzung nach Anspruch 1 oder 2, **dadurch gekennzeichnet, dass** das Ammoniumpolyphosphat einen Polymeranteil zwischen 50 und 70 Gew.-% und einen Phosphoranhydridanteil zwischen 34 und 40 Gew.-% in Bezug auf das gesamte Ammoniumpolyphosphat in der Zusammensetzung hat, vorzugsweise wobei das Ammoniumpolyphosphat einen PzOs-Anteil mit 36 % bis 38 Gew.-% aufweist und eine Polymerisierungsrate von größer als 60 % hat.

4. Flammenhemmende Zusammensetzung nach einem der Ansprüche 1 bis 3, **dadurch gekennzeichnet, dass** die Zugabe des Harnstoffes 4,5 Gew.-% des Gesamtgewichts der Zusammensetzung ausmacht.

5. Flammenhemmende Zusammensetzung nach einem der Ansprüche 1 bis 4, **dadurch gekennzeichnet, dass** das Natriumpolyphosphat $Na_2H_2P_2O_7$ (Di-Natriumpyrophosphat), CAS 7722-88-5 ist mit einem Anteil von 0,5 Gew.-% bis 2 Gew.-% des Gesamtgewichts der Zusammensetzung, und noch bevorzugter 1 Gew.-% des Gesamtgewichts der Zusammensetzung.

6. Flammenhemmende Zusammensetzung nach einem der Ansprüche 1 bis 5, **dadurch gekennzeichnet, dass** als ein komplementäres Korrosionsverhinderungsmittel das Zn-Derivat ein Zn-Sulfat mit einem Anteil zwischen 0,4 Gew.-% und 0,6 Gew.-% des Gesamtgewichts der Zusammensetzung, noch bevorzugter 0,5 Gew.-% des Gesamtgewichts der Zusammensetzung, ist.

7. Flammenhemmende Zusammensetzung nach einem der Ansprüche 1 bis 6, **dadurch gekennzeichnet, dass** als ein komplementäres Korrosionsverhinderungsmittel Benzotriazol aus der Gruppe der Triazole mit einem Anteil zwischen 0,4 Gew.-% und 0,6 Gew.-% des Gesamtgewichts der Zusammensetzung, und noch bevorzugter 0,5 Gew.-% des Gesamtgewichts der Zusammensetzung, hinzugefügt ist.

8. Flammenhemmende Zusammensetzung nach einem der Ansprüche 1 bis 7, **dadurch gekennzeichnet, dass** als ein anorganisches Verdickungsmittel mikroniziertes modifiziertes Sepiolith mit einem Anteil zwischen 1,5 Gew.-% und 2,5 Gew.-% des Gesamtgewichts der Zusammensetzung, und noch bevorzugter 2 Gew.-% des Gesamtgewichts der Zusammensetzung, enthalten ist.

9. Flammenhemmende Zusammensetzung nach einem der Ansprüche 1 bis 8, **dadurch gekennzeichnet, dass** als ein organisches Verdickungsmittel eine 80-Gitter-Struktur aus granuliertem Xanthan-Gummi mit einem Anteil zwischen 0,4 Gew.-% und 0,8 Gew.-% des Gesamtgewichts der Zusammensetzung, und noch bevorzugter mit 0,6 Gew.-% des Gesamtgewichts der Zusammensetzung, enthalten ist.

10. Flammenhemmende Zusammensetzung nach Anspruch 9, **dadurch gekennzeichnet, dass** der granulierte Xanthan-Gummi mikro-gekapselter Xanthan-Gummi ist.

11. Flammenhemmende Zusammensetzung nach einem der Ansprüche 1 bis 10, **dadurch gekennzeichnet, dass** als anorganische Pigmentfarbstoffe Eisenoxid mit einem Anteil zwischen 0,5 Gew.-% und 1,5 Gew.-% des Gesamtgewichts der Zusammensetzung, und noch bevorzugter 1 Gew.-% des Gesamtgewichts der Zusammensetzung, enthalten ist.

12. Flammenhemmende Zusammensetzung nach einem der Ansprüche 1 bis 11, **dadurch gekennzeichnet, dass** als flüchtige Farbstoffe Karmin-Rot, CAS 1260-17-9 mit einem Anteil von 0,2 Gew.-% bis 0,6 Gew.-% des Gesamtgewichts der Zusammensetzung, und noch bevorzugter 0,4 Gew.-% des Gesamtgewichts der Zusammensetzung, enthalten ist.

13. Flammenhemmende Zusammensetzung nach einem der Ansprüche 1 bis 12, wobei die Zusammensetzung ferner eine Mischung aus Ammoniumorthophosphaten mit einem Anteil von 5 bis 15 Gew.-% des Gesamtgewichts der Zusammensetzung aufweist, vorzugsweise, wobei die Ammoniumorthophophate eine Mischung aus Monobasis-Ammoniumorthophosphat (MAP) und Di-Basis-Ammoniumorthophosphat (DAP) aufweist, noch bevorzugter, wobei die Mischung aus Monobasis-Ammoniumorthophosphat und Di-Basisammoniumorthophosphat eine äquimolekulare Mischung sind.

14. Wässrige Mischung mit einer flammenhemmenden Zusammensetzung nach Anspruch 13, wobei die flammenhemmende Zusammensetzung mit einem Hemmmittel in Wasser gelöst ist: Wasserverhältnis von 1:4 bis 1:7 bezogen auf das Volumen, vorzugsweise, wobei die flammenhemmende Zusammensetzung mit einem Hemmmittel in Wasser gelöst ist: Wasserverhältnis von 1:6 bezogen auf das Volumen.

**Revendications**

1. Composition ignifuge à base de polyphosphate d'ammonium, **caractérisée en ce que** la composition comprend :

- comme un inhibiteur de corrosion : un mélange comprenant (a) de l'urée, à un pourcentage de 3 à 10 % en masse de la masse totale de la composition et dans une forme de solution aqueuse ; (b) des polyphosphates de sodium avec une longueur de chaîne de 2 à 6 ; (c) des dérivés de Zn excluant les phosphates, et, (d) des dérivés de triazole ;
- comme un épaississant inorganique : de la sépiolite modifiée micronisée à un pourcentage de 1,5 à 2,5 % en masse de la masse totale de la composition ;
- comme un épaississant organique : de la gomme xanthane granulée à un pourcentage de 0,4 à 0,8 % en masse de la masse totale de la composition ;
- comme colorants de pigments inorganiques : des dérivés de la famille des oxydes de fer à un pourcentage de 0,5 à 1,5 % en masse de la masse totale de la composition, et ;
- comme colorants fugitifs : des dérivés de la famille des colorants du rouge cochenille à un pourcentage de 0,2 à 0,6 % en masse de la masse totale de la composition.

2. Composition ignifuge selon la revendication 1, **caractérisée en ce que** l'addition de polyphosphate d'ammonium est de 80 à 90 % en masse de la masse totale de la composition, de préférence de 85 % en masse de la masse totale de la composition.

3. Composition ignifuge selon l'une quelconque des revendications 1 ou 2, **caractérisée en ce que** le polyphosphate d'ammonium présente une teneur en polymère de 50 à 70 % en masse et une teneur en anhydride phosphorique de 34 à 40 % en masse, par rapport au polyphosphate d'ammonium total dans la composition, de préférence dans laquelle le polyphosphate d'ammonium présente un $P_2O_5$ de 36 % à 38 % en masse et un taux de polymérisation supérieur à 60 %.

**4.** Composition ignifuge selon l'une quelconque des revendications 1 à 3, **caractérisée en ce que** l'addition d'urée est de 4,5 % en masse de la masse totale de la composition.

**5.** Composition ignifuge selon l'une quelconque des revendications 1 à 4, **caractérisée en ce que** le polyphosphate de sodium est $Na_2H_2P_2O_7$ (pyrophosphate de disodium), CAS 7722-88-5, avec une addition de 0,5 % à 2 % en masse de la masse totale de la composition, et encore mieux, 1 % en masse de la masse totale de la composition.

**6.** Composition ignifuge selon l'une quelconque des revendications 1 à 5, **caractérisée en ce qu'**un inhibiteur de corrosion complémentaire, le dérivé de Zn est le sulfate de Zn à un pourcentage de 0,4 % à 0,6 % en masse de la masse totale de la composition, et encore mieux, de 0,5 % en masse de la masse totale de la composition.

**7.** Composition ignifuge selon l'une quelconque des revendications 1 à 6, **caractérisée en ce qu'**en tant qu'inhibiteur de corrosion complémentaire, le benzotriazole se trouve dans le groupe de triazoles ajoutés à un pourcentage de 0,4 % à 0,6 % en masse de la masse totale de la composition, et encore mieux, 0,5 % en masse de la masse totale de la composition.

**8.** Composition ignifuge selon l'une quelconque des revendications 1 à 7, **caractérisée en ce qu'**en tant qu'épaississant inorganique, de la sépiolite modifiée micronisée est incorporée à un pourcentage de 1,5 % à 2,5 % en masse de la masse totale de la composition, et encore mieux, 2 % en masse de la masse totale de la composition.

**9.** Composition ignifuge selon l'une quelconque des revendications 1 à 8, **caractérisée en ce qu'**en tant qu'épaississant organique, de la gomme xanthane granulée à maille 80 est incorporée à un pourcentage de 0,4 % à 0,8 % en masse de la masse totale de la composition, et encore mieux, 0,6 % en masse de la masse totale de la composition.

**10.** Composition ignifuge selon la revendication 9, **caractérisée en ce que** la gomme xanthane granulée est de la gomme xanthane microencapsulée.

**11.** Composition ignifuge selon l'une quelconque des revendications 1 à 10, **caractérisée en ce qu'**en tant que colorants de pigments inorganiques, de l'oxyde ferrique est incorporé à un pourcentage de 0,5 % à 1,5 % en masse de la masse totale de la composition, et encore mieux, 1 % en masse de la masse totale de la composition.

**12.** Composition ignifuge selon l'une quelconque des revendications 1 à 11, **caractérisée en ce qu'**en tant que colorants fugitifs, du rouge carmin, CAS 1260-17-9, est incorporé à un pourcentage de 0,2 % à 0,6 % en masse de la masse totale de la composition, et encore mieux, 0,4 % en masse de la masse totale de la composition.

**13.** Composition ignifuge selon l'une quelconque des revendications 1 à 12, où la composition comprend de plus un mélange d'orthophosphates d'ammonium à un pourcentage de 5-15 % en masse de la masse totale de la composition, de préférence dans laquelle les orthophosphates d'ammonium sont un mélange d'orthophosphate d'ammonium monobasique (MAP) et d'orthophosphate d'ammonium dibasique (DAP), encore mieux où le mélange d'orthophosphate d'ammonium monobasique et d'orthophosphate d'ammonium dibasique est un mélange équimoléculaire.

**14.** Mélange dilué comprenant une composition ignifuge selon la revendication 13, dans lequel la composition ignifuge est diluée dans de l'eau dans un rapport agent ignifuge-eau de 1:4 à 1:7 en volume, de préférence dans lequel la composition ignifuge est diluée à un rapport agent ignifuge:eau de 1:6 en volume.

**REFERENCES CITED IN THE DESCRIPTION**

**Patent documents cited in the description**

- US 3960735 A
- WO 2008155187 A
- US 6802994 B
- US 3887511 A
- US 3809653 A
- WO 03057317 A

- EP 0693304 A1
- US 4822524 A
- ES 2310963 B1
- ES 200701696
- ES 2386711 A1

**Non-patent literature cited in the description**

- *CHEMICAL ABSTRACTS,* 1260-17-9
- *CHEMICAL ABSTRACTS,* 7722-88-5

- *CHEMICAL ABSTRACTS,* 7722-76-1
- *CHEMICAL ABSTRACTS,* 7783-28-0